# FASCICULE DE BREVET EUROPEEN

(11) **EP 1 671 341 B1**
(45) Date de publication et mention de la délivrance du brevet: **23.03.2011**
(21) Numéro de dépôt: 04766864.5
(22) Date de dépôt: 29.09.2004
(51) Int. Cl.: H01H 9/22, G06F 1/00

(54) **DISPOSITIF ANTI-INTRUSION NOTAMMENT POUR TERMINAL DE PAIEMENT ELECTRONIQUE**
ANTIEINDRINGEINRICHTUNG HAUPTSÄCHLICH FÜR EIN ELEKTRONISCHES BEZAHLUNGSENDGERÄT
ANTI-INTRUSION DEVICE PRIMARILY FOR AN ELECTRONIC PAYMENT TERMINAL

(30) Priorité: 07.10.2003 FR 0311726
(43) Date de publication de la demande: 21.06.2006
(73) Titulaire: Thales, 92200 Neuilly Sur Seine (FR)
(72) Inventeur: LEON, Jean-Luc, THALES Intellectual Property, F-94117 Arcueil (FR)
(74) Mandataire: Lucas, Laurent Jacques
(86) Numéro de dépôt international: PCT/EP2004/052352
(87) Numéro de publication internationale: WO 2005/034157

(56) Documents cités:
- EP-A- 0 411 185
- FR-A- 2 806 507
- FR-A- 2 815 733

## Description

La présente invention concerne un dispositif anti-intrusion pour la protection de boîtiers. Elle s'applique notamment à la protection d'un boîtier d'un terminal de paiement électronique ou d'un boîtier de saisie de code confidentiel (connu sous le nom de "PIN-Pad" dans la littérature anglo-saxonne).

Un terminal de paiement électronique comporte un boîtier dans lequel sont prévus notamment un écran d'information, un lecteur de carte à mémoire, un clavier sur lequel un client peut saisir un code confidentiel, et des moyens de traitement associés au lecteur et au clavier pour effectuer les vérifications et la transaction. Les moyens de traitements comprennent des circuits électroniques permettant de réaliser des fonctions sensibles, telle que la vérification la validité du code saisi par le client.

Certains terminaux peuvent être modifiés de façon frauduleuse pour altérer leur fonctionnement, et par exemple enregistrer les codes confidentiels saisis par les clients ou débiter un montant supérieur à celui affiché par l'écran d'information. Afin d'éviter ces fraudes, on prévoit des dispositifs de protection contre l'intrusion dans un boîtier. Ces dispositifs permettent de détecter toute ouverture du boîtier, les moyens de traitements étant désactivés en cas d'ouverture. Par exemple, la demande de brevet français n° 00 03465, déposée le 17/03/2000 et publiée sous le numéro FR 2 806 507, décrit une membrane élastomère dans laquelle est moulée au moins un bouton de détection d'ouverture.

La demande de brevet français déposée le 20/10/2000 et publiée sous le numéro FR 2 815 733, décrit un dispositif de sécurité pour clavier.

L'invention vise à apporter une solution technique alternative à ce problème, cette solution étant économique et facile à mettre en oeuvre. L'invention présente par ailleurs l'avantage d'être robuste et de présenter une fiabilité durable dans le temps grâce à l'utilisation d'un ressort. L'invention a aussi pour avantage qu'elle évite de détecter des ouvertures de manière intempestives, notamment lorsque le boîtier est soumis à des chocs ou à des vibrations. A cet effet, le dispositif anti-intrusion selon l'invention comprend au moins un ressort, le ressort étant agencé de manière à être sous pression et à agir électriquement sur un circuit électronique lorsque le boîtier est fermé, et à ne plus agir sur le circuit électronique lorsque le boîtier est ouvert.

D'autres caractéristiques et avantages de l'invention apparaîtront à la lecture de la description détaillée suivante présentée à titre d'illustration non limitative et faite en référence aux figures annexées, lesquelles représentent :
- les figures 1a à 1d, des éléments d'un terminal de paiement électronique dans des vues en perspective ;
- la figure 2, le détail d'un dispositif anti-intrusion dans une vue en coupe ;
- la figure 3, le détail d'un autre mode de réalisation de l'invention dans une vue en coupe ;
- la figure 4, un exemple de dispositif de guidage selon un mode de réalisation avantageux de l'invention ;
- la figure 5, un exemple de contacts électriques d'un circuit électronique sur lequel agit un ressort selon l'invention
- les figures 6 et 7, un exemple de réalisation avantageux dans lequel le circuit sur lequel agit le dispositif anti-intrusion comporte au moins une zone conductrice à un potentiel déterminé, placée autour de l'endroit où agit le ressort sur le circuit.

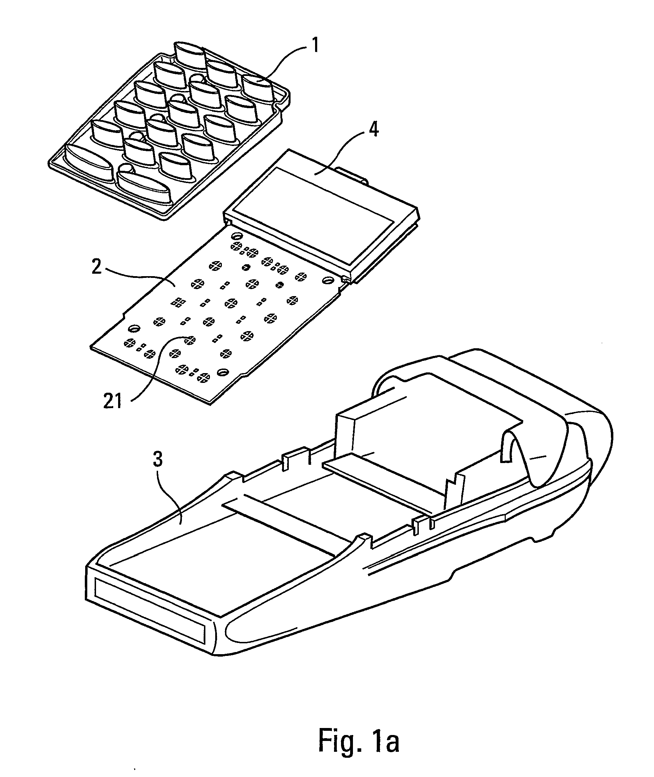

On se réfère maintenant aux figures 1a à 1d sur laquelle est représenté à titre d'exemple un terminal de paiement électronique de type portable (avec ou sans fil).

On se réfère à la figure 1a. Le terminal comprend un châssis 3 recevant des éléments constitutifs du terminal, tel qu'une imprimante, un lecteur de carte à mémoire. Selon une variante de réalisation non représentée, le châssis est supprimé et les éléments du terminal sont montés directement sur les surfaces internes d'un boîtier.

Le terminal comprend en outre un clavier. Une membrane clavier 1, de préférence en matière élastomère, peut former les touches du clavier. La membrane clavier 1 peut être clipsée sur un circuit électronique 2 permettant notamment de détecter l'enfoncement des touches du clavier. Le circuit électronique 2 est de préférence un circuit multi-couche. La surface du circuit 2 destinée à être en contact avec la membrane clavier 1 comporte des contacts électriques 21, formant des extrémités de pistes conductrices se prolongeant dans des couches internes du circuit.

Le terminal comprend en outre un écran de visualisation 4, l'écran pouvant être monté directement sur le circuit électronique 2.

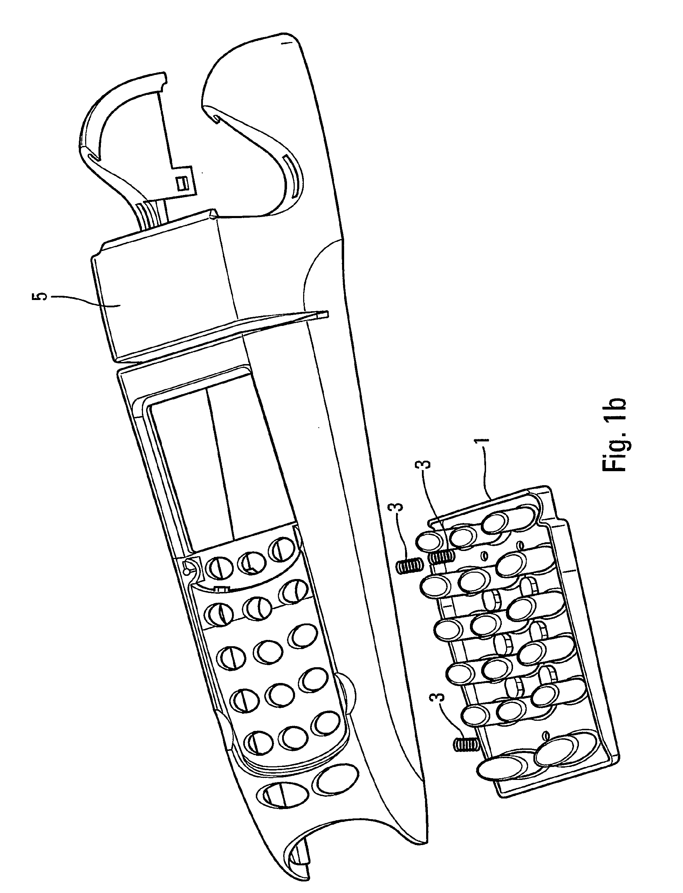

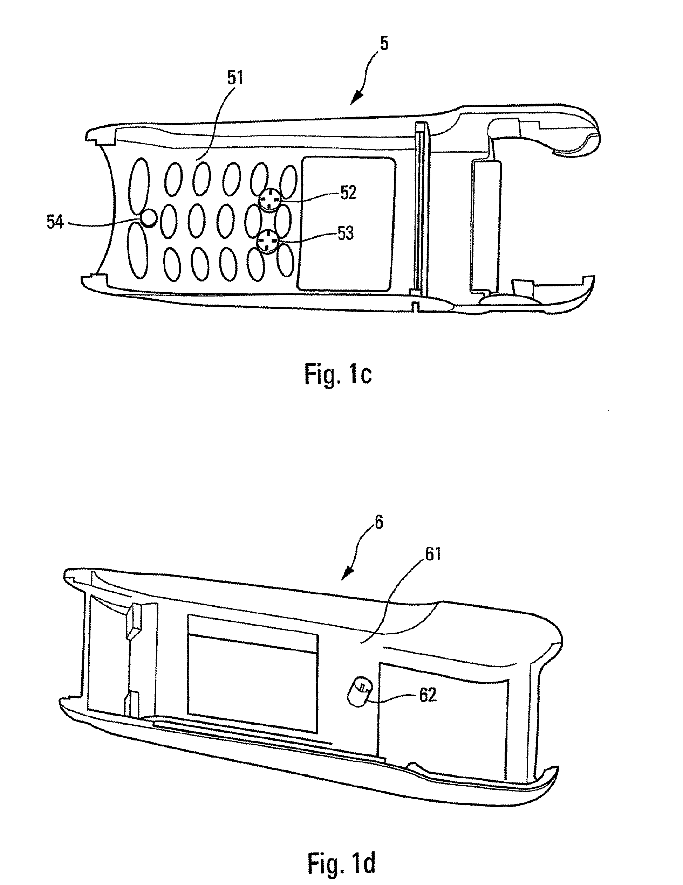

On se réfère aux figures 1b et 1c. Le terminal comprend un boîtier pouvant être formé essentiellement de deux pièces, un capot supérieur 5 et un capot inférieur 6 (voir la figure 1d). Le capot supérieur comprend des ouvertures permettant un accès aux touches du clavier et de voir l'écran de visualisation. Des dispositifs anti-intrusion selon l'invention peuvent être prévus au niveau du capot supérieur 5. Dans l'exemple représenté, trois dispositifs anti-intrusion 52, 53, 54 sont prévus sur la surface interne 51 du capot supérieur 5. Selon un mode de réalisation avantageux, chaque dispositif anti-intrusion comprend un ressort 3 agencé pour agir électriquement sur le circuit électronique 2 par l'intermédiaire de la membrane élastomère 2.

On se réfère à la figure 1d. Un dispositif anti-intrusion selon l'invention peut en outre être prévu au niveau du capot inférieur 6, le capot inférieur étant la partie du boîtier sur laquelle repose le terminal en fonctionnement normal. Dans l'exemple représenté, un dispositif anti-intrusion 62 est prévu sur la surface interne 61 du capot inférieur. Ce dispositif permet de détecter les tentatives d'ouverture du boîtier par le capot inférieur, lequel comprend généralement une trappe d'accès à une batterie.

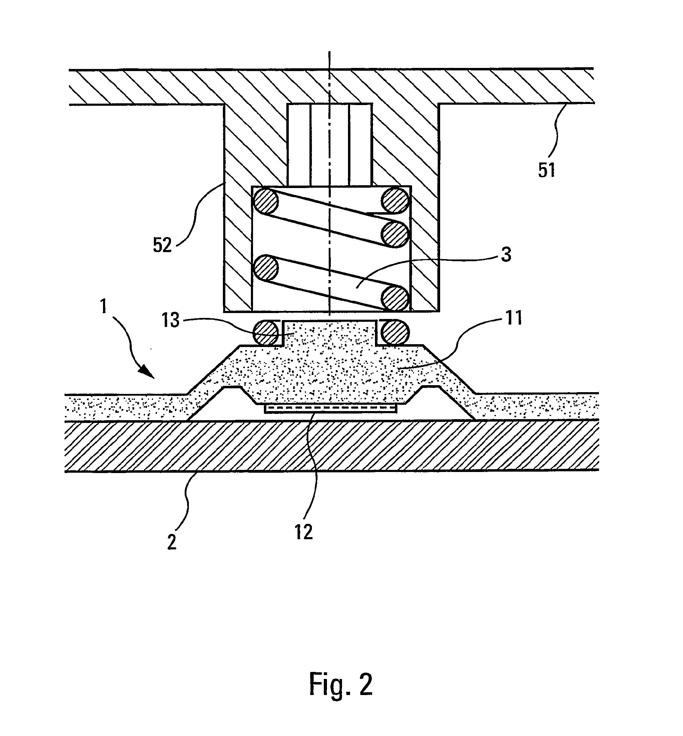

On se réfère maintenant à la figure 2 sur laquelle est représenté plus en détail un dispositif anti-intrusion prévu sur la surface intérieure 51 du capot supérieur. Le dispositif anti-intrusion comporte au moins un ressort 3, agencé de manière à être sous pression et à agir électriquement sur le circuit électronique 2 lorsque le boîtier est fermé, et à ne plus agir sur le circuit électronique lorsque le boîtier est ouvert.

Une extrémité du ressort 3 est de préférence fixée à une surface interne du boîtier. De cette manière, le montage d'un terminal est simplifié. De plus, le ressort étant solidaire du boîtier, toute ouverture du boîtier entraîne directement le ressort.

L'autre extrémité du ressort est destinée à être en contact avec la membrane clavier 1, dans laquelle est moulée au moins un bouton 11. La membrane est agencée de sorte que le ressort presse sur le bouton lorsque le boîtier est fermé, et de sorte que le ressort laisse le bouton au repos lorsque le boîtier est ouvert. Le bouton est agencé de manière à agir sur le circuit électronique lorsqu'il est mis sous pression par le ressort, et à ne plus agir sur le circuit électronique lorsqu'il est laissé au repos.

Le fonctionnement du dispositif anti-intrusion est le suivant. Lorsque le boîtier est fermé, le ressort est sous pression. Il exerce une pression sur le bouton 11, cette pression étant suffisante pour maintenir le bouton dans un état enfoncé. Lorsque le boîtier est ouvert, le ressort est au repos. Aucune pression n'étant exercée sur le bouton 11, le bouton se trouve dans un état de repos dans laquelle il n'agit pas sur le circuit électronique, tel que représenté sur la figure 2.

Lors du mouvement d'ouverture du boîtier, le ressort s'éloigne de la membrane, ce qui lui laisse la possibilité de s'allonger. Le ressort s'allonge d'abord tout en maintenant un contact avec le bouton de la membrane. A mesure que le ressort s'allonge, la pression qu'il exerce sur le bouton 11 diminue progressivement. A un seuil de pression donné, la pression exercée sur le bouton n'est pas suffisante pour maintenir le bouton enfoncé. Le bouton passe alors dans un état de repos dans lequel il n'agit plus sur le circuit électronique. Cette transition peut alors être détectée comme une intrusion par le circuit électronique.

Ce mode de réalisation permet ainsi d'assurer une transition fiable de l'état enfoncé à l'état de repos du bouton lors d'une intrusion, c'est à dire lors d'une ouverture du boîtier. L'emploi du ressort évite des fausses alertes, notamment en cas de simples chocs.

Selon un mode de réalisation pratique et simple à mettre en oeuvre, l'action du bouton sur le circuit électronique se fait par un contact électrique entre une partie conductrice 12 du bouton et des pistes conductrices du circuit. La partie conductrice 12 peut être formée par une surface conductrice telle qu'une pastille dorée ou un dépôt de carbone.

Selon un mode de réalisation avantageux, le bouton présente un épaulement 13 agencé pour maintenir le ressort en position par rapport au bouton. Cet épaulement permet non seulement de maintenir le ressort en position centrée par rapport au bouton, mais aussi de faciliter le montage.

Bien entendu, la membrane dans laquelle est moulé un bouton de dispositif anti-intrusion n'est pas nécessairement une membrane clavier.

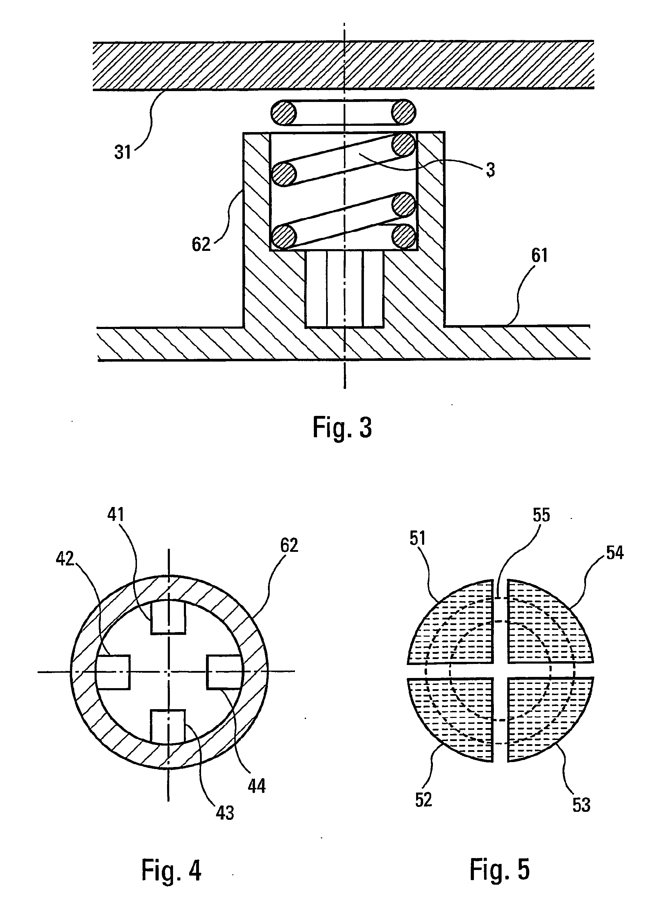

On se réfère maintenant à la figure 3 sur laquelle est représenté plus en détail le dispositif anti-intrusion prévu sur la surface interne 61 du capot inférieur. Dans ce mode de réalisation de l'invention, le ressort 3 du dispositif anti-intrusion agit directement sur un circuit électronique 31, et non par l'intermédiaire d'une membrane. L'action du ressort sur le circuit électronique se fait par un contact électrique entre une partie conductrice du ressort et des pistes conductrices du circuit (voir la figure 5).

Selon un mode de réalisation avantageux de l'invention, le dispositif anti-intrusion comprend en outre un dispositif de guidage 62 du ressort. Le ressort est placé dans le dispositif de guidage. Le dispositif de guidage 62 est agencé pour guider le ressort selon l'axe longitudinal du ressort. Le dispositif de guidage permet de rendre le dispositif anti-intrusion plus fiable, en guidant la course du ressort. Il permet en outre de maintenir le ressort en place.

Selon un mode de réalisation pratique, le dispositif de guidage peut être moulé directement dans la surface interne du boîtier tel que représenté sur les figures 2 ou 3. Bien entendu; le dispositif de guidage peut aussi être formé par une pièce indépendante du boîtier, cette pièce étant fixée à une surface interne du boîtier. Ceci permet par exemple de prévoir un dispositif anti-intrusion modulaire, dans lequel un ressort est déjà fixé dans un dispositif de guidage, le dispositif de guidage étant formé par une pièce indépendante.

On se réfère à la figure 4. Selon un mode de réalisation avantageux, le dispositif de guidage 62 présente un évidement sensiblement cylindrique, évidement dans lequel est destiné à être placé le ressort. Le dispositif de guidage permet ainsi de protéger le ressort du dispositif anti-intrusion. De plus, dans le mode de réalisation avantageux décrit en relation avec la figure 2, le dispositif de guidage permet de protéger le bouton 11 de la membrane en le cachant partiellement. Ceci évite qu'un fraudeur puisse y accéder directement.

Selon un mode de réalisation avantageux, le dispositif de guidage comprend une cale pour limiter la course du ressort. Ceci permet de prévoir des ressorts de petites tailles, plus sensibles aux mouvements d'ouvertures du boîtier. La cale peut être formée par des nervures 41, 42, 43, 44 de matière prévues à l'intérieur de l'évidement cylindrique.

On se réfère à la figure 5 sur laquelle est représenté un exemple de contacts électriques d'un circuit électronique sur lequel agit un ressort selon l'invention dans le mode de réalisation décrit en relation avec la figure 3. Les contacts électriques sont au moins au nombre de deux. Ils peuvent être au nombre de quatre 51, 52, 53, 54. Lorsque le ressort est en contact avec le circuit électronique, sa dernière spire 55 relie électriquement les différents contacts ou au moins deux d'entre eux. On notera que la même forme de contacts électriques peut être utilisée dans le mode de réalisation décrit en relation avec la figure 2, la partie conductrice sous le bouton remplaçant le rôle du ressort.

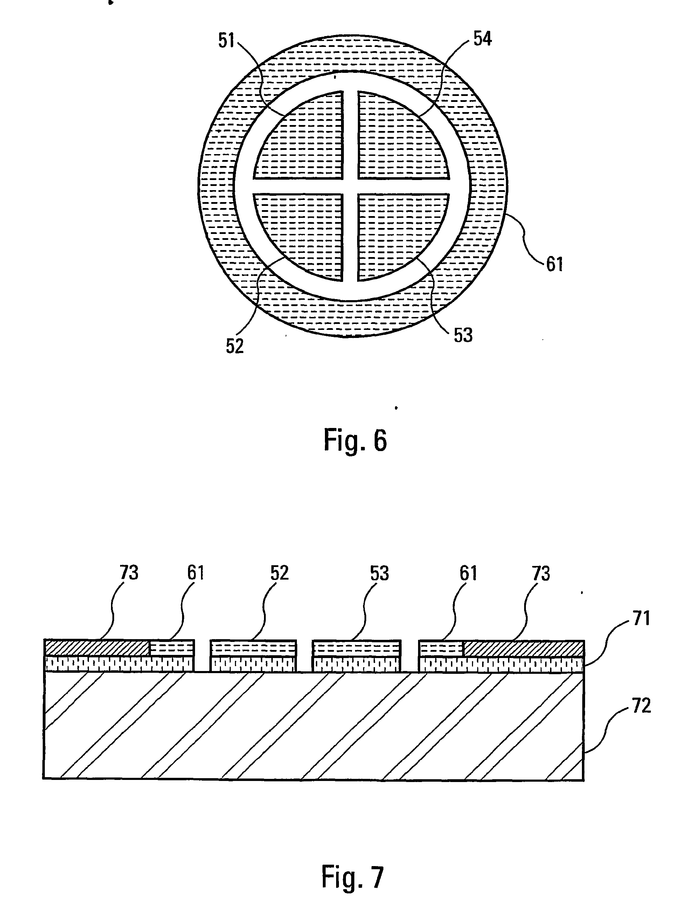

On se réfère aux figures 6 et 7 sur lesquelles est représenté un exemple de réalisation avantageux. Une zone conductrice 61 peut être ajoutée autour des contacts électriques 51, 52, 53, 54 du circuit. La zone conductrice est reliée à un potentiel déterminé, tel que une masse du circuit électronique. La zone conductrice peut être formée par une piste en forme d'anneau entourant les contacts 51, 52, 53, 54. Ainsi, si quelqu'un tente d'injecter un produit conducteur au niveau des contacts électriques 51, 52, 53, 54 (à l'aide d'une seringue par exemple), un contact électrique sera établi non seulement entre les contacts 51, 52, 53, 54, mais aussi avec la zone conductrice 61. Les contacts 51 , 52, 53, 54 seront alors mis au potentiel déterminé, ce qui pourra être détecté comme une tentative d'intrusion.

La figure 7 présente u ne section d'un exemple de réalisation d'un tel circuit. Le circuit peut comprendre une couche de résine isolante formant un support 72, portant une couche de cuivre gravée par des techniques conventionnelles. La couche de cuivre comprend par exemple un plan de masse 71, comprenant des évidements au niveau des emplacements des contacts 51, 52, 53, 54, et recouvrant presque en totalité le circuit. Le plan de masse 71 peut être quant à lui recouvert d'un vernis isolant 73 presque en totalité. Les contacts 51, 52, 53, 54 peuvent être formés par des dépôts d'or au-dessus de la couche de cuivre. La zone conductrice 61 peut être formée par un dépôt d'or en forme d'anneau, au dessus du plan de masse en cuivre, dans une zone non recouverte de vernis.

## Revendications

1. Dispositif anti-intrusion pour détecter d'éventuelles tentatives d'ouverture d'un boîtier, comprenant au moins un ressort (3), le ressort étant agencé de manière à être sous pression et à agir électriquement sur un circuit électronique (31) lorsque le boîtier est fermé, et à ne plus agir sur le circuit électronique lorsque le boîtier est ouverte, **caractérisé en ce que** l'action du ressort sur le circuit électronique se fait directement par un contact électrique entre le ressort et des pistes conductrices (51, 52, 53, 54) du circuit.

2. Dispositif selon la revendication 1 dans lequel une extrémité du ressort est fixée à une surface interne (61) du boîtier.

3. Dispositif selon la revendication 1 dans lequel le ressort est placé dans un dispositif de guidage (62) agencé pour guider le ressort selon l'axe longitudinal dudit ressort.

4. Dispositif selon la revendication précédente dans lequel le dispositif de guidage présente un évidement sensiblement cylindrique, évidement dans lequel est destiné à être placé le ressort.

5. Dispositif selon la revendication 1 dans lequel le boîtier est un boîtier de terminal de paiement électronique ou de boîtier de saisie de code confidentiel.

6. Dispositif selon la revendication 1 **caractérisé en ce que** lorsque le ressort est en contact avec le circuit électronique, la dernière spire (55) dudit ressort est reliée électriquement aux différents pistes conductrices (51, 52, 53, 54) ou au moins deux d'entre elles.

7. Dispositif selon la revendication 6**caractérisé en ce qu'**une zone conductrice (61) est disposée autour des pistes conductrices (51, 52, 53, 54), la zone conductrice (61) étant reliée à un potentiel déterminé.

## Claims

1. An anti-intrusion device for detecting any attempts at opening a housing, including at least one spring (3), which spring is arranged so as to be under pressure and to act electrically on an electronic circuit (31) when the housing is closed, and to not act on the electronic circuit when the housing is open, **characterised in that** the action of the spring on the electronic circuit occurs directly by means of an electrical contact between the spring and the conducting tracks (51, 52, 53, 54) of the circuit.

2. The device according to claim 1, wherein one end of the spring is fixed to an internal surface (61) of the housing.

3. The device according to claim 1, wherein the spring is placed in a guiding device (62) arranged to guide the spring along the longitudinal axis of said spring.

4. The device according to any one of the previous claims, wherein the guiding device has an essentially cylindrical recess, which recess is designed to receive the spring.

5. The device according to claim 1, wherein the housing is an electronic payment terminal or a housing for entering a confidential code.

6. The device according to claim 1, **characterised in that** when the spring is in contact with the electronic circuit, the last turn (55) of said spring is electrically connected to the various conducting tracks (51, 52, 53, 54) or to at least two of said conducting tracks.

7. The device according claim 6, **characterised in that** a conducting zone (61) is disposed around the conducting tracks (51, 52, 53, 54), the conducting zone (61) being electrically connected at a predetermined potential.

## Patentansprüche

1. Antieindringvorrichtung zum Erkennen eines eventuellen Versuchs des Öffnens eines Gehäuses, die wenigstens eine Feder (3) umfasst, die so ausgelegt ist, dass sie unter Druck ist und elektrisch auf eine elektronische Schaltung (31) wirkt, wenn das Gerät geschlossen ist, und nicht mehr auf die elektronische Schaltung wirkt, wenn das Gerät offen ist, **dadurch gekennzeichnet, dass** die Wirkung der Feder auf die elektronische Schaltung direkt über einen elektrischen Kontakt zwischen der Feder und den Leiterbahnen (51, 52, 53, 54) der Schaltung auftritt.

2. Vorrichtung nach Anspruch 1, bei der ein Ende der Feder an einer Innenfläche (61 des Gehäuses befestigt ist.

3. Vorrichtung nach Anspruch 1, bei der sich die Feder in einer Führungsvorrichtung (62) zum Führen der Feder entlang der Längsachse der Feder befindet.

4. Vorrichtung nach einem der vorherigen Ansprüche, bei der die Führungsvorrichtung eine im Wesentlichen zylindrische Aussparung hat, die zum Platzieren der Feder darin ausgelegt ist.

5. Vorrichtung nach Anspruch 1, bei der das Gehäuse ein Endgehäuse für elektronische Zahlungen oder ein Gehäuse zur Eingabe eines Geheimcodes ist.

6. Vorrichtung nach Anspruch 1, **dadurch gekennzeichnet, dass**, wenn die Feder mit der elektronischen Schaltung in Kontakt ist, die letzte Windung (55) der Feder elektrisch mit den verschiedenen Leiterbahnen (51, 52, 53, 54) oder mit wenigstens zwei der Leiterbahnen verbunden ist.

7. Vorrichtung nach Anspruch 6, **dadurch gekennzeichnet, dass** eine leitende Zone (61) um die Leiterbahnen (51, 52, 53, 54) herum angeordnet ist, wobei die leitende Zone (61) elektrisch mit einem vorbestimmten Potential verbunden ist.
